# EUROPEAN PATENT APPLICATION

(11) **EP 4 613 572 A1**
(43) Date of publication of application: **10.09.2025**
(21) Application number: 23884988.9
(22) Date of filing: 01.11.2023
(51) Int. Cl.: B60R 22/343

(54) **SEAT-BELT WINDER ASSEMBLY**

(30) Priority: 02.11.2022 CN 202211362865
(71) Applicant: Yanfeng International Automotive Technology Co., Ltd., Shanghai 201306 (CN)
(72) Inventor: HUANG, Laiguo, Shanghai 201306 (CN); ZHAO, Wei, Shanghai 201306 (CN); HUANG, Yongliang, Shanghai 201306 (CN)
(74) Representative: Specht, Peter
(86) International application number: PCT/CN2023/129056
(87) International publication number: WO 2024/094062

(57) **Abstract**

A safety belt retractor assembly, comprising a winding reel (140) rotatably mounted in a frame (130) and having a belt strap wound thereon; a blocking device being capable of blocking the winding reel (140) in an extension direction of the belt strap; a belt sensing assembly (100) being capable of driving the blocking device to block the winding reel (140) when a blocking condition is met, a belt sensing assembly blocking member being subjected to a spring force in a direction blocking the belt sensing assembly (100); a return assembly (80), the return assembly being in a first blocking position where the return assembly (80) blocks the belt sensing assembly blocking member at a blocking position, when an extension length of the belt strap is less than a predetermined value; a restrain spring (60), which is arranged to provide a drive force to limit the return assembly (80) to a position not blocking the belt sensing assembly (100) when the winding reel (140) rotates in the extension direction of the belt strap and the extension length of the belt strap exceeds the predetermined value, and to release the return assembly (80) when the winding reel (140) rotates in a direction opposite to the extension direction of the belt strap and the extension length of the belt strap exceeds the predetermined value.

## Description

### TECHNICAL FIELD

The present invention relates to the technical field of vehicles, in particular to a safety belt retractor assembly, which can be configured as an electronic vehicle sensing safety belt retractor assembly.

### BACKGROUND ART

With the continuous electronization and intelligentization of automobiles, traditional mechanical vehicle sensing retractor can no longer meet the needs of all customers, and electronic vehicle sensing retractor is an inevitable development trend of safety belts. For safety consideration, when a vehicle is powered down (for example, when a collision happens to the vehicle and power is cut off), the safety belt should be locked. This demand also brings the problem that an occupant cannot wear a safety belt after getting on the vehicle and when the vehicle is unpowered.

At present, in the industry, by the function of allowing an occupant to wear a safety belt for a first time after getting on the vehicle and when the vehicle is unpowered, consideration is given concurrently to the safety requirement of the vehicle and the requirement to wear the safety belt when the vehicle is not powered on.

For example, Chinese Patent Application for invention CN112969616A discloses an electronic vehicle-sensing retractor with a first-time wearable function, which reveals an ECL blocking lever and an LC blocking lever for blocking a vehicle sensing pawl simultaneously.

Wherein, when the belt strap is extended but an extension length is within a predetermined length, the ECL blocking lever and the LC blocking lever block the vehicle sensing pawl simultaneously, so that the belt strap can be pulled out normally; when the extension length of the belt strap exceeds the predetermined length, the ECL blocking lever continues to block the vehicle sensing pawl, while the LC blocking lever changes its state to disengage the vehicle sensing pawl (that is, moves to a position not blocking the vehicle sensing pawl), and pre-blocks the ELC blocking lever. When the belt strap is retracted by a length after the safety belt is worn: the belt shaft is rotated in a reversed direction to move the ECL blocking lever back to unblock the vehicle sensing pawl, and the ELC blocking lever is blocked by the LC blocking lever. Since the vehicle sensing pawl is subjected to action of a spring in a direction engaging the control disk, the vehicle sensing pawl gets into engagement with the control disk after being unblocked so as to allow a relative movement between the control disk and the belt shaft to release the blocking device to lock the safety belt such that the belt strap cannot be pulled out. However, the above-mentioned arrangement needs more blocking levers and thus has a relatively complicated structure.

The prior art also discloses a conventional safety belt retractor, which also solves the problem of allowing the safety belt to be worn when the vehicle is assembled in the OEM factory or the seat needs to be tilted. It comprises a mechanical casing fixed relative to a frame, a winding reel wound with a strap (i.e., a safety belt), an NHOM disk, a KISI disk, a counting gear mechanism and a pawl, wherein the pawl is an actuator of the vehicle sensing function, and when it can swing normally relative to an electromagnetic switch, the vehicle sensing function is normal, and when the pawl is blocked relative to the electromagnetic switch, the vehicle sensing function is suppressed. The pawl is blocked and unblocked by a return assembly to control on and off of the vehicle sensing suppression function. Wherein, the boss of the counting gear mechanism is inserted axially into shaped holes of the NHOM disk and the KISI disk. Since the boss is higher than the NHOM disk and the KISI disk, when the boss moves, the NHOM disk and the KISI disk are driven to rotate by the shaped holes. The NHOM disk and the KISI disk each have two outer circular portions of different diameters, namely, a large-diameter outer circular portion and a small-diameter outer circular portion, and the large-diameter outer circular portion and small-diameter outer circular portion each have an outer wall surface.

The return assembly is provided with a shaft hole, which is pivotally connected with a rotating shaft on an inner end face of the mechanical casing, so that the return assembly is rotatable around the rotating shaft. The return assembly has a return lever extending from the shaft hole, an abutting arm extending from the return lever to the direction of the axial center of the winding reel and abutting against and cooperating with the outer wall surface of the NHOM disk, and a press spring arranged at one end of the return lever away from the shaft hole and cooperating with the pawl, so that the return assembly does not rotate when the abutting arm keeps abutting against the outer wall surface of the large-diameter outer circular portion of the NHOM disk. When the NHOM disk moves from alignment with the abutting arm by the large-diameter outer circular portion to alignment with the abutting arm by the small-diameter outer circular portion, the abutting arm will abut on the large-diameter outer circular portion of the KISI disk, thus releasing the pawl.

As a result, the following functions are realized:

vehicle sensing suppression function: the large-diameter outer circular portion of the NHOM disk limits the return assembly downwards, and the press spring of the return assembly presses down the pawl to block the pawl.

Elimination of vehicle sensing suppression function: the NHOM disk moves from alignment with the abutting arm by the large-diameter outer circular portion to alignment with the abutting arm by the small-diameter outer circular portion, and the large-diameter outer circular portion of the KISI disk limits the return assembly, so that the press spring of the return assembly rotates in a direction releasing the pawl, and the press spring of the return assembly is no longer in contact with the pawl, thus unblocking the pawl.

Function of determining an extension length: every time the counting gear mechanism rolls counterclockwise for one revolution, the boss will rotate clockwise by a small angle, and the counting gear mechanism rotates with the extension of the belt strap.

Combining the above three functions, when the belt strap is pulled out less than a predetermined length, the boss of the counting gear mechanism drives the NHOM disk to rotate, but the abutting arm of the return assembly still abuts against the outer wall surface of the large-diameter outer circular portion of the NHOM disk after the rotation, and the return assembly is limited downwards by the large-diameter outer circular portion of the NHOM disk, the press spring presses down the pawl so as to block the pawl, thus suppressing the vehicle sensing function.

When the belt strap is pulled out beyond the predetermined length, the boss of the counting gear mechanism drives the NHOM disk to rotate, and the abutting arm of the return assembly abuts against the large-diameter outer circular portion of the KISI disk after the rotation, by which the return assembly is limited, the press spring of the return assembly is no longer in contact with the pawl, thus unblocking the pawl and eliminating the vehicle sensing suppression function.

The above-mentioned prior art provides a retractor which can be pulled out within a predetermined length of the belt strap. However, directly adopting the above-mentioned prior art will bring two problems: if the predetermined length of the belt strap is too long, the vehicle sensing function will still be suppressed after an occupant wears the safety belt; If the predetermined length of the belt strap is too short, the safety belt is already no longer extendable when the occupant has not yet put on the safety belt.

### SUMMARY OF THE INVENTION

An object of the present invention is to provide a safety belt retractor assembly, so that a safety belt can be worn normally after an occupant gets on a vehicle and in condition that, for example, the safety belt is configured as an electronic vehicle sensing safety belt and the vehicle is not powered on. As mentioned above, the safety belt retractor assembly can be configured as an electronic vehicle sensing safety belt retractor assembly, for example. The so-called "electronic vehicle sensing" means that the blocking conditions (such as acceleration) are judged by means of sensors of ECU, for example, so as to realize the blocking and unblocking functions of the safety belt by powering on and off.

In order to achieve the above object, the present invention relates to a safety belt retractor assembly, comprising: a winding reel configured to be rotatably mounted in a frame and capable of having a belt strap wound thereon; a blocking device arranged to be capable of blocking the winding reel in an extension direction of the belt strap; a belt sensing assembly configured to be capable of driving the blocking device to block the winding reel when a blocking condition is met, the belt sensing assembly comprising a ratchet including ratchet teeth, and the belt sensing assembly configured to be blocked when a ratchet tooth is engaged by a belt sensing assembly blocking member, so as to be capable of driving the blocking device to block the winding reel by engaging with blocking teeth on the frame, for example; the belt sensing assembly blocking member being subjected to a spring force in a direction blocking the belt sensing assembly; and a return assembly, the return assembly being in a first blocking position where the return assembly blocks the belt sensing assembly blocking member in a position not blocking the belt sensing assembly, when an extension length of the belt strap is less than a predetermined value; wherein, the safety belt retractor assembly further comprises a restrain spring, the restrain spring being arranged to provide a drive force to limit the return assembly to a blocking position not blocking the belt sensing assembly when the winding reel rotates in the extension direction of the belt strap and the extension length of the belt strap exceeds the predetermined value, and to be in a position releasing the return assembly when the winding reel rotates in a direction opposite to the extension direction of the belt strap and the extension length of the belt strap exceeds the predetermined value.

Preferably, the restrain spring is swingable between a blocking position and an unblocking position, wherein in the blocking position of the restrain spring, the restrain spring provides the return assembly with the drive force to limit it to the blocking position not blocking the belt sensing assembly, wherein when the belt strap rotates reversely, the restrain spring releases the return assembly and reaches the unblocking position not blocking the return assembly.

Preferably, the safety belt retractor assembly comprises an electromagnetic switch, and the belt sensing assembly blocking member is configured as a pawl of the electromagnetic switch, the pawl being subjected to a spring force in a direction engaging with the ratchet teeth.

Preferably, measurement of the extension length of the belt strap is realized by a counting gear mechanism, wherein the counting gear mechanism is coupled to a shaft of the winding reel and is capable of judging whether the extension length of the belt strap exceeds the predetermined value and controlling a movement of a switch device according to the result of the judgment, wherein the switch device is configured to: limit the return assembly to the first blocking position when the extension length of the belt strap is less than the predetermined value; and release the return assembly so that the return assembly swings to the unblocking position, when the extension length of the belt strap exceeds the predetermined value and the restrain member is in the unblocking position, wherein, when the return assembly is in the unblocking position, the return assembly releases the pawl and does not engage with the ratchet teeth, wherein, the counting gear mechanism comprises a ring-shaped toothing portion driven by the rotating shaft of the winding reel, the ring-shaped toothing portion being eccentrically arranged relative to a ring-shaped corresponding toothing portion and rolls on the corresponding toothing portion in a circumferential direction during rotation of the rotating shaft of the winding reel, so that the ring-shaped toothing portion is driven to perform reduction rotational motion, wherein the ring-shaped corresponding toothing portion is concentric with the shaft of the winding reel, for example.

Preferably, the safety belt retractor assembly further comprises a rotating member coupled to a rotating shaft of the belt sensing assembly, wherein the restrain spring is capable of being driven by the rotating member in a same direction as a rotation direction of the rotating member.

Preferably, the restrain spring has one end mounted to the rotating member in an interference fit manner and is capable of being driven by the rotating member via frictional force.

Preferably, the rotating member is configured as an eccentric cam, wherein the eccentric cam comprises an eccentric portion and a cylindrical portion in an axial direction, and the restrain spring is mounted on the cylindrical portion.

Preferably, the restrain spring has one end clamp-fitted on an outer wall of the belt sensing assembly and is capable of being driven by the belt sensing assembly via frictional force.

Preferably, the return assembly comprises a release block, wherein when the restrain spring is in the blocking position, the restrain spring is in press fit with the release block to provide the return assembly with the drive force to limit it to the blocking position, wherein when the restrain spring is in the unblocking position, the restrain spring is separated from the release block and is in the position not blocking the return assembly.

Preferably, the safety belt retractor assembly is configured as an electronic vehicle sensing safety belt retractor assembly.

Preferably, a boss is arranged on the counting gear mechanism, wherein the boss is configured to rotate by an angle when the ring-shaped toothing portion rolls for one full cycle, and is configured to drive the switch device.

Preferably, the switch device comprises: a NHOM disk having a large-diameter outer circular portion and a small-diameter outer circular portion, the large-diameter outer circular portion and the small-diameter outer circular portion, for example, having a center of circle at the same position; wherein, during extension of the belt strap, the NHOM disk is configured to: be in a position where the large-diameter outer circular portion of the NHOM disk is aligned with an abutting portion of the return assembly when the extension length of the belt strap is less than the predetermined value; be rotated by the boss on the counting gear mechanism to a position where the small-diameter outer circular portion of the NHOM disk is aligned with the abutting portion of the return assembly when the extension length of the belt strap exceeds the predetermined value; wherein, when the restrain spring is in the unblocking position so that the abutting portion of the return assembly abuts against the large-diameter outer circular portion of the NHOM disk, the return assembly is in the first blocking position; and/or a KISI disk having a large-diameter outer circular portion and a small-diameter outer circular portion with the same center of circle position and different outer diameters, wherein, during extension of the belt strap, the KISI disk is configured to: be rotated by the boss on the counting gear mechanism to a position where the large-diameter outer circular portion of the KISI disk is aligned with the abutting portion of the return assembly when the extension length of the belt strap exceeds the predetermined value and is less than a KISI disk switching threshold length; be rotated by the boss on the counting gear mechanism to a position where the small-diameter outer circular portion of the KISI disk is aligned with the abutting portion of the return assembly when the extension length of the belt strap reaches the KISI disk switching threshold length; wherein, when the abutting portion of the return assembly abuts against the large-diameter outer circular portion of the KISI disk, the return assembly is in the unblocking position; wherein, under the circumstance where the switch device comprises only the NHOM disk, the return assembly is in the unblocking position when the extension length of the belt strap exceeds the predetermined value and the restrain spring is in the unblocking position, so that the abutting portion of the return assembly abuts against the small-diameter outer circular portion of the NHOM disk; wherein, under the circumstance where the switch device comprises only the KISI disk, the KISI disk further comprises a second large-diameter outer circular portion, the second large-diameter outer circular portion having a center of circle at the same position as that of the large-diameter outer circular portion and the small-diameter outer circular portion of the KISI disk, and the second large-diameter outer circular portion having an outer diameter greater than that of the large-diameter outer circular portion of the KISI disk, wherein when the extension length of the belt strap is less than the predetermined value, the KISI disk is in a position where the second large-diameter outer circular portion of the KISI disk is aligned with the abutting portion of the return assembly, wherein when the abutting portion of the return assembly abuts against the second large-diameter outer circular portion of the KISI disk, the return assembly is in the first blocking position.

Preferably, the switch device comprises at least the KISI disk, and when the abutting portion of the return assembly abuts against the small-diameter outer circular portion of the KISI disk, the return assembly is in a second blocking position, in the second blocking position, the return assembly itself, for example, the release block of the return assembly engages with the ratchet teeth, so as to switch the retractor assembly from an ELR state to an ALR state.

Preferably, the KISI disk is provided with a profiled hole matched with the boss of the counting gear mechanism, the profiled hole having a first flank and a second flank, wherein the first flank is in press fit with the boss during extension of the belt strap, the second flank is opposite to the first flank and is in press fit with the boss during retraction of the belt strap, wherein the first flank and the second flank are located at both ends of the profiled hole in a length direction, the profiled hole having a dimension in the length direction greater than that of the boss so that the length of the profiled hole corresponds to a retracted belt strap length required when the belt strap is retracted from the KISI disk switching threshold length until the retractor assembly leaves the ALR state.

The electronic vehicle sensing safety belt retractor assembly according to the present invention adopts the restrain spring to limit the return assembly in the blocking position, the vehicle sensing locking mechanism is unblocked to release the vehicle sensing function when the belt strap is retracted, so that a first-time wearable function of the electronic vehicle sensing safety belt is realized when the power is off. Besides, through the arrangement of the NHOM disk, it is fixed in the blocking position by the large diameter of the NHOM disk before the extension length of the belt strap exceeds the predetermined value; when the extension length of the belt strap exceeds the predetermined value and the belt strap continues to be extended, the return assembly is limited in the blocking position by the restrain spring, the vehicle sensing blocking mechanism is unblocked to release the vehicle sensing function only when the belt strap is retracted, therefore it is ensured that the vehicle sensing function can still be suppressed and the belt strap can be further extended when the belt strap is extended beyond the predetermined value, and it can effectively realize the function that: an occupant can wear the safety belt normally after the occupant gets on the vehicle under the condition that the power is off, and after the safety belt is worn, the safety belt is locked when the vehicle is powered off.

### BRIEF DESCRIPTION OF THE DRAWINGS

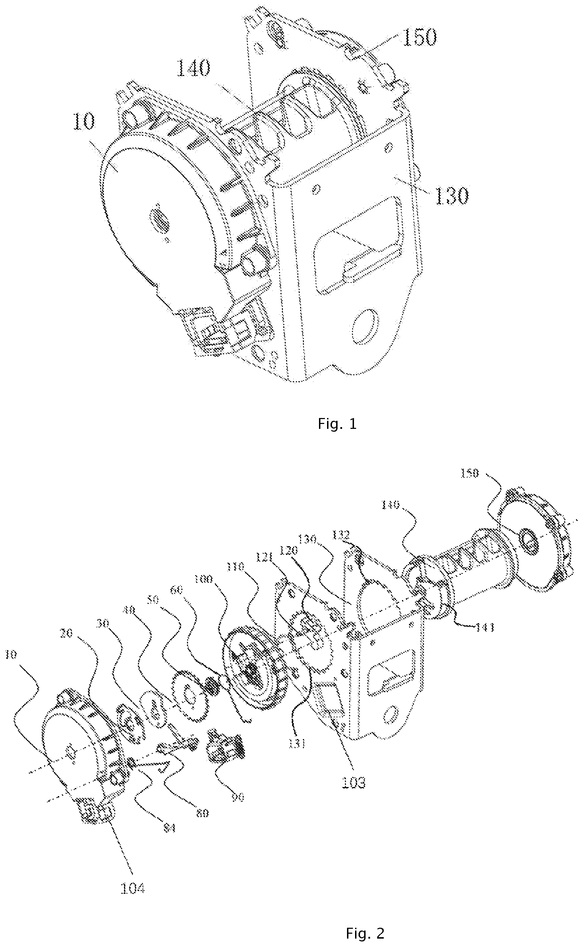

Fig. 1 is a schematic view of the overall structure of the safety belt retractor assembly according to a first embodiment of the present invention.
Fig. 2 is an exploded view of the safety belt retractor assembly shown in Fig. 1.

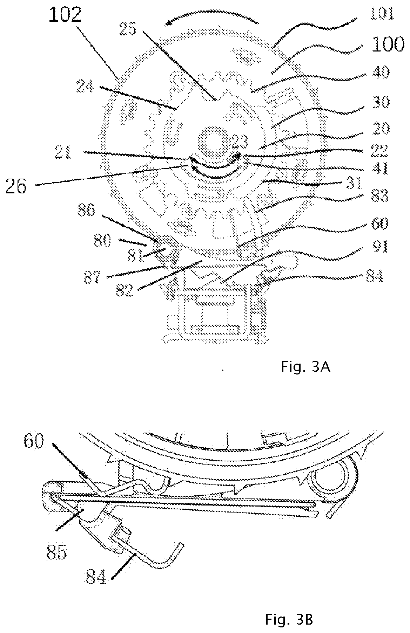

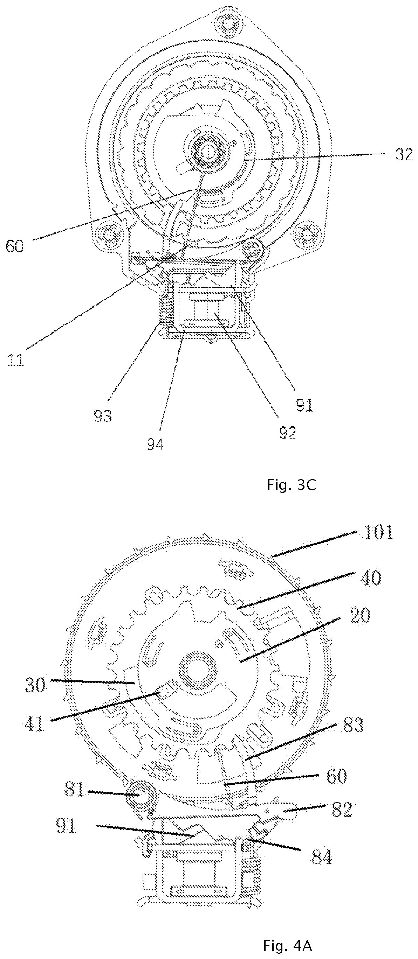

Figs. 3A and 3B are internal structural views of the safety belt retractor assembly when the belt strap is just pulled out by the occupant and the extension amount does not reach the predetermined value, wherein Fig. 3A shows a front side, Fig. 3B shows part of a back side, and Fig. 3C shows the back side, wherein the ratchet is removed and the restrain spring is in the blocking position.

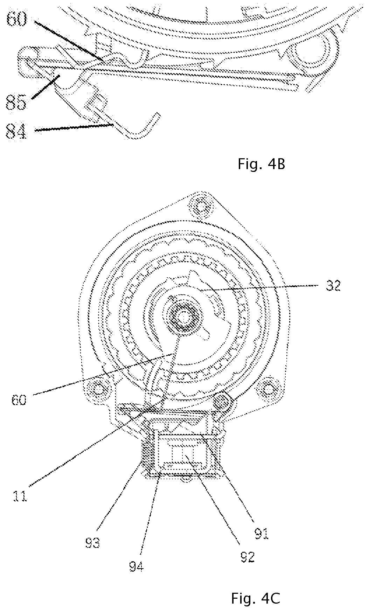

Figs. 4A and 4B are internal structural views of the safety belt retractor assembly when the belt strap is pulled out by the occupant and the extension amount exceeds the predetermined value, wherein Fig. 4A shows the front side, Fig. 4B shows part of the back side, and Fig. 4C shows the back side, wherein the ratchet is removed and the restrain spring is in the blocking position.

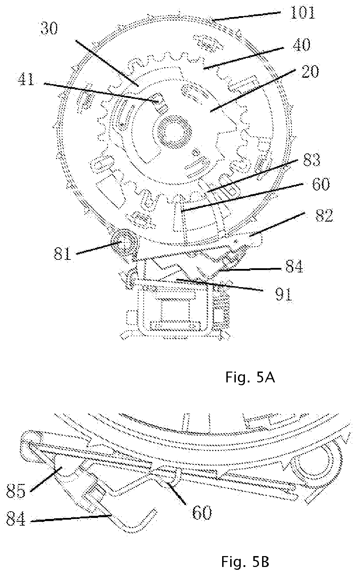

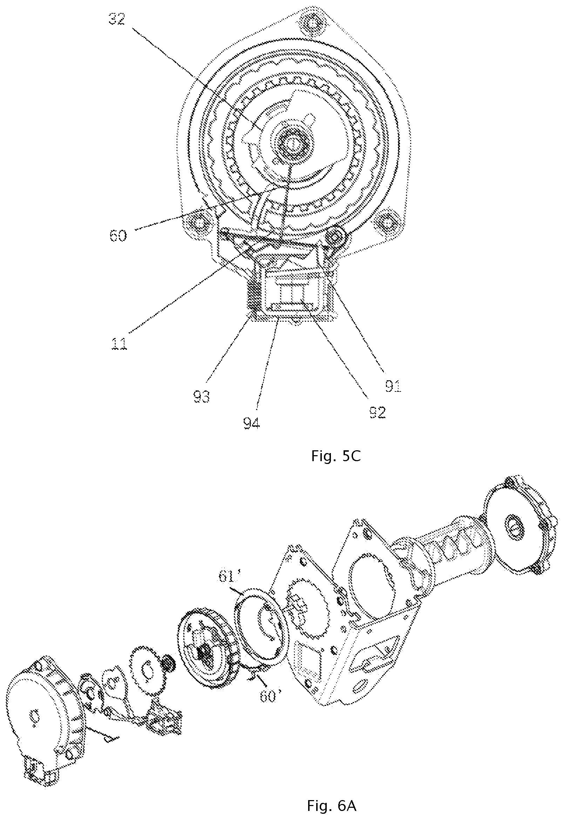

Figs. 5A and 5B are internal structural views of the safety belt retractor assembly when retraction of a short length occurs after the safety belt is worn by the occupant, wherein Fig. 5A shows the front side, Fig. 5B shows part of the back side, and Fig. 5C shows the back side, wherein the ratchet is removed and the restrain spring is in the unblocking position.

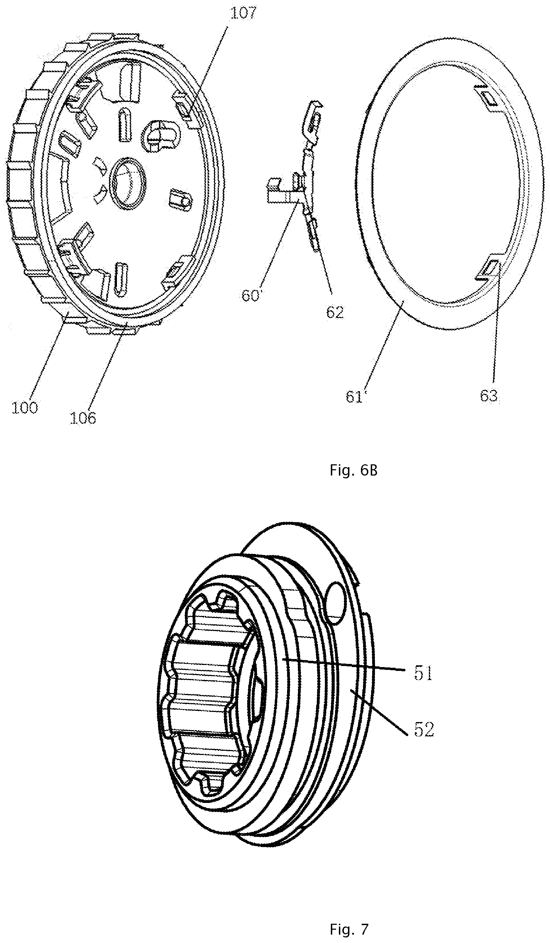

Fig. 6A is an exploded view of the safety belt retractor assembly according to a second embodiment of the present invention, and Fig. 6B is a perspective view of the restrain spring, the belt sensing assembly and the fastening spring of the safety belt retractor assembly according to the second embodiment of the present invention.
Fig. 7 is a schematic structural view of an eccentric cam of the safety belt retractor assembly according to the present invention.

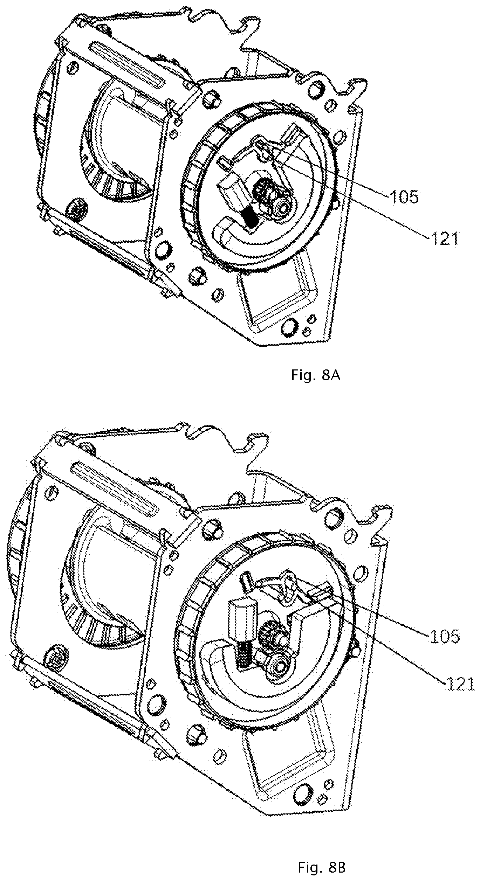

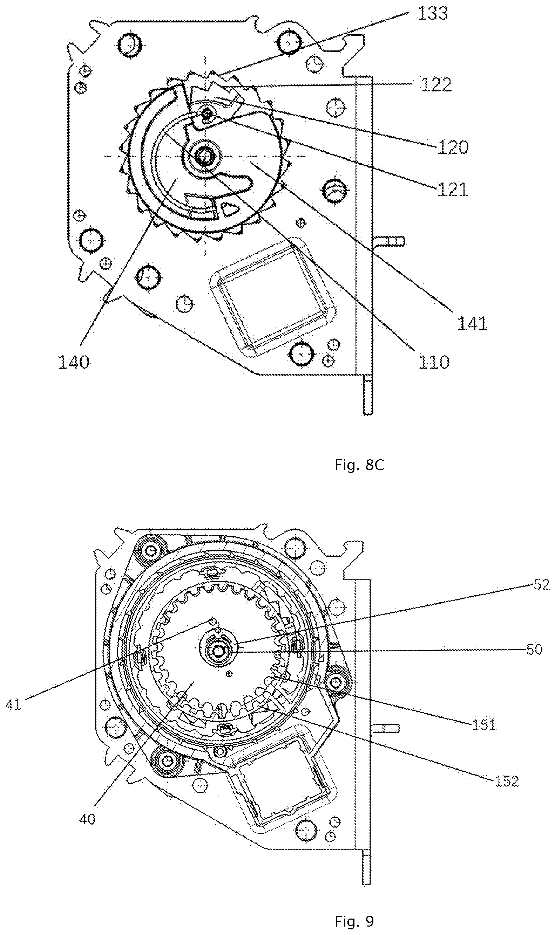

Fig. 8A is a schematic view in which a blocking device of the safety belt retractor assembly according to the present invention is in a first position, Fig. 8B is a schematic view in which the blocking device of the safety belt retractor assembly according to the present invention is in a second position, and Fig. 8C is a schematic view in which the blocking device of the safety belt retractor assembly according to the present invention is in the first position, with the belt sensing assembly removed to show the blocking pawl.
Fig. 9 is a schematic view of the counting gear mechanism and related components of the safety belt retractor assembly according to the present invention.

### DETAILED DESCRIPTION OF PREFERRED EMBODIMENTS

The present invention will be further explained with reference to specific embodiments. It should be understood that the following embodiments are only used to describe the invention and are not used to limit the scope of the present invention.

### First Embodiment

Fig. 1 and Fig. 2 are a safety belt retractor assembly according to a first embodiment of the present invention, which is configured so that an occupant can wear a safety belt normally after getting on the vehicle without powering on the vehicle, and solves the problem that the belt strap cannot be extended due to the belt strap length being set to be too short, on the premise of ensuring safety without increasing the set length of the belt strap.

As shown in Figs. 1 and 2, the retractor assembly may comprise a frame 130 arranged on the vehicle body and having a first opening 131 and a second opening 132 on both sides respectively, a mechanical casing 10 and a coil spring assembly 150 fixedly mounted on both sides of the frame 130 by snap riveting pins, and a winding reel 140 rotatably mounted to the frame 130 through a rotating shaft cooperating with central holes of the mechanical casing 10 and the coil spring assembly 150. The winding reel 140 can be used for winding a belt strap which can be extended as a safety belt; the coil spring assembly 150 is configured to provide a rotary force to the winding reel 140 to retract the belt strap, so that the belt strap wound on the winding reel can be retracted after being extended, and can provide a pull-back force to control automatic rewinding.

Wherein, the mechanical casing 10 can be provided on the outer side of the first opening 131, and the coil spring assembly 150 can be provided on the outer side of the second opening 132. the mechanical casing 10 and the plane in which the first opening 131 of the frame 130 is located in can together define a cavity defined by the mechanical casing 10 and the frame 130.

A KISI disk 20, an NHOM disk 30, a counting gear mechanism 40, an eccentric cam 50, a restrain spring 60, a return assembly 80 and a belt sensing assembly 100 can be arranged in the cavity. Wherein, the KISI disk 20, the NHOM disk 30, the counting gear mechanism 40, the eccentric cam 50 and the belt sensing assembly 100 can each have a shaft hole matched with the rotating shaft of the winding reel 140, so that these components can each rotate around the rotating shaft of the winding reel 140. The eccentric cam 50 can be arranged to be coupled to the rotating shaft of the belt sensing assembly 100. The eccentric cam 50 and the mechanical casing 10 can be assembled together in an axial direction by snap fitting, the KISI disk 20, the NHOM disk 30 and the counting gear mechanism 40 can be assembled to the mechanical casing 10 through shaft hole fitting, and can be configured such that the NHOM disk 30 axially limits the KISI disk 20, the counting gear mechanism 40 axially limits the NHOM disk 30 and the eccentric cam 50 axially limits the counting gear mechanism 40.

In other embodiments, said KISI disk 20, NHOM disk 30, counting gear mechanism 40, eccentric cam 50, restrain spring 60, return assembly 80 and belt sensing assembly 100 can also be arranged at other positions such as an outer side of the cavity formed by the mechanical casing 10 and the frame 130.

The belt sensing assembly 100 may comprise a ratchet 101, and ratchet teeth 102 may be provided on an outer wall surface of the ratchet 101. An electromagnetic switch 90 is arranged radially outside the belt sensing assembly 100. In this embodiment, the bottom of the frame 130 can be provided with an accommodating groove 103, and the bottom of the mechanical casing 10 can be provided with a snap frame 104. The electromagnetic switch 90 can be arranged in the accommodating groove 103 and fixedly connected with the snap frame 104 by snap-fitting, so that the electromagnetic switch 90 can be fixedly mounted to the mechanical casing 10, that is, neither the mechanical casing 10 nor the electromagnetic switch 90 is movable relative to the frame 130.

For example, as shown in Fig. 3C, the electromagnetic switch 90 may comprise an electromagnet 92, a magnet mounting seat 94 for accommodating the electromagnet 92, and a pawl 91 which is arranged above the electromagnet 92 with its one end hinged to the magnet mounting seat 94, wherein the magnet mounting seat 94 and the pawl 91 can be connected with two ends of a pawl tension spring 93 respectively, and the pawl tension spring 93 can be configured to provide a spring force to the pawl 91 to drive the pawl 91 to open, wherein the opening direction of the pawl 91 is a direction in which it engages with the ratchet teeth 102 of the ratchet 101 of the belt sensing assembly 100. As a result, the pawl 91 opens when it is in the unblocked state and is not subjected to an electromagnetic force of the electromagnet 92. In other words, the pawl 91 is subjected to the spring force in the direction of engaging with the ratchet teeth 102 of the belt sensing assembly 100. The electromagnet 92 provides the pawl 91 with an electromagnetic force opposite to the direction of engaging the ratchet teeth 102 when energized. As a result, the pawl 91 can be switched between an unblocked state and a blocked state, wherein the blocked state of the pawl 91 means that the pawl 91 is fixed at a position not engaging with the ratchet teeth 102, such as being fixed on the electromagnet 92, even though it is not affected by the electromagnetic force of the electromagnet 92; the unblocked state of the pawl 91 means that the pawl 91, when the it is not affected by the electromagnetic force of the electromagnet 92, opens and engages with the ratchet teeth 102, so that it can swing normally (i.e. open or close) under the electromagnetic force, and the vehicle sensing function is normal. The function of the electromagnetic switch 90 is to provide the electronic vehicle sensing function when the pawl 91 is in the unblocked state. The belt sensing assembly 100 is configured to block the winding reel 140 by the engaging of the pawl 91 with the ratchet teeth 102 of the belt sensing assembly 100 when the pawl 91 is open, and to rotate synchronously with the winding reel 140 when the pawl 91 is closed.

As shown in Fig. 2 and Fig. 8C, a freeform post 141 inserted into the first opening 131 and having a notch may be provided on an end face of the winding reel 140 facing the mechanical casing 10, a blocking device configured to be able to block the winding reel 140 in the extension direction of the belt strap may be accommodated in the notch of the freeform post 141. The blocking device may be constructed in the form of a blocking claw 120. The blocking claw 120 has a thickness that may be approximately the same as the depth of the notch of the freeform post 141, and may have blocking teeth 122 that are cooperated with teeth 133 at the edge of the first opening 131 of the frame 130. The blocking claw 120 may also be provided with a drive shaft 121 extending in a direction away from the winding reel 140.

As shown in Figs. 8A and 8B, the ratchet 101 of the belt sensing assembly 100 can be provided with a waist-shaped hole 105 (preferably a waist-shaped hole with curvature), and the drive shaft 121 can be inserted into the waist-shaped hole 105 to drive the belt sensing assembly 100 to rotate along with the blocking claw 120 through cooperation of the drive shaft 121 with the waist-shaped hole 105.

For example, the drive shaft 121 is movable between a first position and a second position of the waist hole 105, so that the blocking claw 120 can switch between an unblocked state and a blocked state. As shown in Figs. 8A and 8C, when the drive shaft 121 is in the first position of the waist-shaped hole 105, the blocking claw 120 is positioned adjacent to the rotating shaft of the winding reel 140, and the blocking claw 120 is in the unblocked state, that is, the blocking teeth 122 of the blocking claw 120 are spaced from the teeth 133 at the edge of the first opening 131 of the frame 130 such that the blocking claw 120 can freely rotate along with the winding reel 140 through the cooperation of its own contour with the freeform of the winding reel 140 and through the fastening action of the return spring 110 (which will be described in detail below), thus driving the belt sensing assembly 100 to rotate, so that the winding reel 140 and the belt sensing assembly 100 rotate together. As shown in Fig. 8B, when the drive shaft 121 is in the second position of the waist-shaped hole 105, the blocking claw 120 is positioned away from the rotating shaft of the winding reel 140, and the blocking claw 120 is in the blocked state, that is, the blocking teeth 122 of the blocking claw 120 and the teeth 133 at the edge of the first opening 131 of the frame 130 are engaged and locked with each other such that the blocking claw 120 is fixed by the frame 130, and as the blocking claw 120 can achieve contour fitting with the winding reel 140 through its own contour, the winding reel 140 should therefore be blocked correspondingly.

As shown in Fig. 8C, the winding reel 140 and the blocking claw 120 can be connected by the return spring 110, one end of the return spring 110 can be fixed on the winding reel 140 by a hook, and the other end of which can be fixed to the drive shaft 121 of the blocking claw 120. The return spring 110 may be arranged to provide a force to keep the blocking claw 120 in the unblocked state, that is, a force to keep the blocking claw 120 in the first position of the waist hole 105. As a result, when the belt sensing assembly 100 is blocked, the further rotation of the winding reel 140 can realize the blocking function through the action of the blocking claw 120 and the return spring 110. To be specific, when the belt sensing assembly 100 is blocked and the winding reel 140 continues to rotate in the extension direction of the belt strap, the winding reel 140 will drive the blocking device in the form of the blocking claw 120 to rotate, and then drive the drive shaft 121 of the blocking claw 120 to move from the first position to the second position of the waist-shaped hole 105 against the force of the return spring 110, so that the blocking device in the form of the locking claw 120 is pulled radially outward to engage with the teeth 133 at the edge of the first opening 131 of the frame 130 so as to be blocked. When the ratchet 101 is rotatable normally, the return spring 110 keeps the blocking claw 120 in the unblocked state, that is, the blocking claw 120 is contour-fitted in the notch of the freeform post 141 of the winding reel 140 and is fixed by the return spring 110, and rotates the belt sensing assembly 100 along with the winding reel 140, so that both the winding reel 140 and the belt sensing assembly 100 rotate synchronously. As mentioned above, on one hand, when the pawl 91 of the electromagnetic switch 90 is engaged with the ratchet teeth 102 of the belt sensing assembly 100 (that is, when the pawl 91 is open), the belt sensing assembly 100 is blocked from rotation, and the further rotation of the winding reel 140 in the extension direction of the belt strap can drive the blocking device to block the winding reel 140. On the other hand, the belt sensing assembly 100 is configured to rotate synchronously with the winding reel 140 when the pawl 91 contacts the electromagnet 92 (that is, when the pawl 91 is disengaged from the ratchet teeth 102 of the belt sensing assembly 100).

As so, the electromagnetic switch 90 provides the electronic vehicle sensing function when the pawl 91 is in the unblocked state.

The return assembly 80 is located between the rotating shaft of the winding reel 140 and the electromagnetic switch 90 in the radial direction. The return assembly 80 is arranged to be in the first blocking position to block the pawl 91 at a position not engaging with the ratchet teeth 102 of the belt sensing assembly 100 when the extension length of the belt strap is less than the predetermined value; when the extension length of the belt strap exceeds the predetermined value (and the restrain spring 60 is in the unblocking position as described below), the return assembly 80 is released, so that the return assembly 80 swings to the unblocking position. It should be noted that the predetermined value is a variable value, not a fixed value, and can be adjusted according to different projects. In this embodiment, blocking the pawl 91 in a position not engaging with the ratchet teeth 102 means that the return assembly 80 presses the pawl 91 to be fixed to the electromagnet 92 of the electromagnetic switch 90, and when the return assembly 80 is in the unblocking position, the return assembly 80 is in a position where it releases the pawl 91 and it itself does not engage the ratchet teeth 102. The return assembly 80 can be provided with a shaft hole 81, and can be pivotally connected to a rotating shaft at the edge of the mechanical casing 10 through the shaft hole 81, so that the return assembly 80 is rotatable. Besides, the return assembly 80 can also comprise a return rod 82 extending from the shaft hole 81, an abutting arm 83 extending from the return rod 82 in the direction where the winding reel is located, and a press spring 84 cooperating with the pawl 91. The return assembly 80 can be abutted against the large-diameter outer circular portion 31 of the NHOM disk 30 and the large-diameter outer circular portion 24 of the KISI disk 20 through the abutting arm 83, wherein the large-diameter outer circular portion 31 of the NHOM disk 30 and the large-diameter outer circular portion 24 of the KISI disk 20 will be described in detail below. Wherein, the press spring 84 can be matched with the shaft hole 81 and the press spring 84 can be contour-fitted on the return rod 82 of the return assembly 80. The press spring 84 can be configured to extend to an end of the return rod 82 away from the shaft hole 81, and the other end of the press spring 84 which cooperates with the shaft hole 81 can be a coil portion 86, the coil portion 86 can have a coil portion tail end 87 that cooperates with an inner wall of the mechanical casing to provide a resilience force for the return assembly 80 to return when released, that is, to switch from the first blocking position to the unblocking position or the second blocking position (which will be described in detail below). For example, as shown in Figs. 3A to 3C, the return assembly 80 can also be provided with a release block 85, in this embodiment, the release block 85 can be arranged at a position on the return rod 82 which is away from the shaft hole 81 of the return assembly 80.

The safety belt retractor assembly according to the present invention may comprise a restrain spring 60. The restrain spring 60 may be configured to: provide a drive force to limit the return assembly 80 in the blocking position when the winding reel 140 rotates in the extension direction of the belt strap and the extension length of the belt strap exceeds the predetermined value, which drive force in this embodiment is a drive force to cause the return assembly 80 to swing downwards; be in the position of releasing the return assembly 80, when the extension length of the belt strap exceeds the predetermined value and the winding reel 140 rotates in a direction opposite to the extension direction of the belt strap. Since the pawl 91 is connected to a pawl tension spring 93, and the pawl tension spring 93 is arranged to provide the pawl 91 with a spring force to drive the pawl 91 to a direction engaging with the ratchet teeth 102 (i.e., a force that drives the pawl 91 to open), whereby an ELR (Emergency Locking Retractor) function is realized, that is, the engagement and disengagement of the pawl 91 with the ratchet teeth can be realized by driving the pawl 91 of the electromagnetic switch 90 with electric power, so that, for example, in case of emergency, the electromagnetic switch 90 is de-energized and the pawl 91 is lifted to engage with the ratchet teeth so as to drive the blocking device to block the winding reel 140 to prevent the safety belt from being further extended. For example, as shown in Fig. 3C, one end of the restrain spring 60 can be frictionally interference-fitted on the eccentric cam 50, in particular, one end of the restrain spring 60 can be frictionally interference-fitted with a hollow cylindrical portion 51 of the eccentric cam 50 (as shown in Fig. 7), so that the restrain spring 60 can be subjected to a frictional force in the same direction as the rotation direction of the winding reel 140 so as to move around the eccentric cam 50 relative to the eccentric cam 50. As shown in Fig. 3C, the mechanical casing 10 can be provided with a limit groove 11, the limit groove 11 can be located between the release block of the return assembly 80 and the rotating shaft of the winding reel 140 in a radial direction, and a middle section of the restrain spring 60 can be inserted into the limit groove 11, so that the restrain spring 60 is constrained to be swingable only between the blocking position and the unblocking position in the limit groove 11 (in this embodiment, an angle at which the restrain spring 60 is swingable in the limit groove 11 between the blocking position and the unblocking position is about 5°). In the process of extending the belt strap, the restrain spring 60 is in the blocking position due to being subjected to a frictional force moving towards the blocking position, and when the restrain spring 60 is in the blocking position, it is in press-fit with the release block 85 to provide the return assembly 80 with the drive force to limit the return assembly 80 in the blocking position (that is, the pawl 91 is disengaged from the ratchet teeth 102). For example, a swingable portion of the restrain spring 60 may be configured to press an upper surface of the release block 85 downwards. During retraction of the belt strap by a small length after the safety belt is worn, the restrain spring 60 is moved to the unblocking position by the frictional force toward the unblocking position, and when the restrain spring 60 is in the unblocking position, it disengages from the release block 85 and releases the return assembly 80. For example, the swingable portion of the restrain spring 60 may be positioned below the release block 85. The swingable portion of the restrain spring 60 can be an elastic structure having an end that is bent upward, so that the restrain spring 60 can switch from the blocking position to the unblocking position through deformation. It should be understood that the restrain spring 60 may not necessarily be configured as a spring, as long as it can be subjected to force in rotation direction of the winding reel 140 along the extension and retraction of the belt strap, so as to correspondingly be able to restrict the return assembly 80 in the blocking position and release the return assembly 80.

In the present invention, the measurement of the extension length of the belt strap can be realized in the form of a counting gear mechanism 40 coupled to the winding reel, the counting gear mechanism 40 is configured to judge whether the extension length of the belt strap exceeds the predetermined value, and control the movement of a switch device according to the result of the judgment. When the extension length of the belt strap is less than the predetermined value, the switch device can limit the return assembly 80 to the first blocking position, and when the extension length of the belt strap exceeds the predetermined value and the restrain spring 60 is in the unblocking position, the switch device can release the return assembly 80 so that the return assembly 80 swings to the unblocking position. In this embodiment, as shown in Fig. 9, the counting gear mechanism 40 may comprise a ring-shaped toothing portion 151 driven by the rotating shaft of the winding reel 140, the ring-shaped toothing portion 151 is eccentrically arranged relative to a corresponding ring-shaped toothing portion 152 around the periphery of the ring-shaped toothing portion 151 and circumferentially rolls on the corresponding toothing portion 152 during rotation of the rotating shaft of the winding reel 140, thereby the ring-shaped toothing portion 151 is driven to perform reduction rotational motion. The ring-shaped toothing portion 151 can be in fitted connection with the eccentric portion 52 (as shown in Fig. 7) of the eccentric cam 50, and the hollow cylindrical portion 51 of the eccentric cam 50 can be coupled to the rotating shaft of the belt sensing assembly 100, so that the ring-shaped toothing portion 151 can be driven by the rotating shaft of the winding reel 140. As a result, the rotation of the winding reel 140 can drive the eccentric cam 50 to rotate synchronously, and the rotation of the eccentric cam 50 can be converted into a reverse rotation of the counting gear mechanism 40 with a smaller rotation angle than that of the eccentric cam 50 (described in detail below), the switch device is synchronized with the reverse rotation of the counting gear mechanism 40. A boss 41 for driving the switch device to move can be provided on the counting gear mechanism 40.

In this embodiment, the counting gear mechanism 40 and said corresponding toothing portion 152 can be constructed as small-tooth-difference planetary gear, the rotation direction of the boss 41 is opposite to the direction of the rolling of the counting gear mechanism 40 on the corresponding toothing portion 152 and the rotation angle is smaller than the rolling angle of the counting gear mechanism 40 (that is, for every full cycle counterclockwise rolling of the counting gear mechanism 40, the boss 41 rotates clockwise by a small angle), so that the boss 41 provides the above-mentioned reverse rotation. The boss 41 of the counting gear mechanism 40 can be axially inserted into the profiled hole 26 of the switch device. As a result, when the eccentric cam 50 rotates in the movement direction of the winding reel 140, the outer contour of the eccentric portion 52 of the eccentric cam 50 will drive the counting gear mechanism 40 to roll on the corresponding toothing portion 152, so that the boss 41 rotates reversely relative to the movement direction of the winding reel 140, and the switch device will be driven via the boss 41 to rotate together.

For example, as shown in Fig. 3A, the switch device may comprise an NHOM disk 30 and/or a KISI disk 20, wherein the NHOM disk 30 can be configured to realize the function of NHOM (Noise hold on mechanics) while judging the extension length of the belt strap, and the KISI disk 20 can be configured to realize the function of KISI (child protection) while judging the extension length of the belt strap. In this embodiment, the switch device may comprise both the NHOM disk 30 and the KISI disk 20. Both the NHOM disk 30 and the KISI disk 20 may each have two outer circular portions having the same center of circle position and different diameters, that is, the NHOM disk 30 may have a large-diameter outer circular portion 31 and a small-diameter outer circular portion 32 of the NHOM disk 30 (see, for example, Fig. 3C), and the KISI disk 20 may have a large-diameter outer circular portion 24 and a small-diameter outer circular portion 25, each of which has an outer wall surface. As shown in Fig. 3A, an outer diameter of the large-diameter outer circular portion 24 of the KISI disk 20 is designed to be smaller than an outer diameter of the large-diameter outer circular portion 31 of the NHOM disk 30.

When the extension length of the belt strap is less than the predetermined value, the NHOM disk 30 is in a position where the large-diameter outer circular portion 31 of the NHOM disk 30 is aligned with an abutting portion (for example, the abutting arm 83) of the return assembly 80, and when the extension length of the belt strap exceeds the predetermined value, the NHOM disk 30 can be rotated by the boss 41 on the counting gear mechanism 40 to a position where the small-diameter outer circular portion 32 of the NHOM disk is aligned with the abutting portion of the return assembly. When the abutting portion of the return assembly 80 abuts against the large-diameter outer circular portion 31 of the NHOM disk 30, the return assembly 80 is in the first blocking position in which the pawl 91 is blocked and is disengaged from the ratchet teeth 102. In the case where the switch device comprises only the NHOM disk 30, the return assembly 80 is in the unblocking position when the extension length of the belt strap exceeds the predetermined value and the restrain spring 60 is in the unblocking position so that the small-diameter outer circular portion 32 of the NHOM disk 30 abuts against the abutting portion of the return assembly 80.

During extension of the belt strap, when the extension length of the belt strap exceeds the predetermined value and is less than a KISI disk switching threshold length (said KISI disk switching threshold length is usually the total length of the belt strap), by means of the boss 41 on the counting gear mechanism 40, the KISI disk 20 and the NHOM disk 30 can be rotated to a position where the large-diameter outer circular portion 24 of the KISI disk 20 is aligned with the abutting portion of the return assembly 80. When the extension length of the belt strap reaches the KISI disk switching threshold length, the KISI disk 20 can be rotated to a position, where the small-diameter outer circular portion 25 of the KISI disk 20 is aligned with the abutting portion of the return assembly 80, by means of the boss 41 on the counting gear mechanism 40. When the restrain spring 60 is in the unblocking position so that the return assembly 80 abuts against the large-diameter outer circular portion 24 of the KISI disk 20, the return assembly 80 is in the unblocking position. When the restrain spring 60 is in the unblocking position so that the return assembly 80 abuts against the small-diameter outer circular portion 25 of the KISI disk 20, the return assembly 80 is in the second blocking position, and when the return assembly 80 is in the second blocking position, the return assembly 80 is in the position engaging with the ratchet teeth 102 through its release block 85, so that the retractor assembly is switched from an ELR (Emergency Locking Retractor) state to an ALR (Automatic Locking Retractor) state. In the ELR state, the belt sensing assembly 100 can be blocked and released by the electromagnetic switch 90, so that the vehicle sensing function is normal. In the ALR state, the belt sensing assembly 100 is blocked by the return assembly 80, so that no matter whether the power is on or the power is off, both the belt sensing assembly 100 and the winding reel 140 are blocked so that the safety belt cannot be extended, therefore children can be prevented from extending the safety belt excessively, which is suitable for the case in which there is no fixing point for the child seat, so as to lock and fix the child seat. The KISI disk 20 can be provided with a profiled hole 26 matched with the boss 41 of the counting gear mechanism 40, the profiled hole 26 can be provided with a first flank 21 that is in press fit with the boss 41 during extension of the belt strap, and a second flank 22 that is opposite to the first flank 21 and is in press fit with the boss 41 during retraction of the belt strap, the first flank 21 and the second flank 22 are located at the two ends in the length direction of the profiled hole 26, and the profiled hole 26 of the KISI disk 20 has a dimension in the length direction which is greater than that of the boss 41, so that the length of the profiled hole 26 may correspond to a length of the retracted belt strap required for the belt strap to be retracted from the KISI disk switching threshold length until the retractor assembly leaves the ALR function.

To be specific, when the belt strap is continuously extended and reaches the KISI disk switching threshold length, whereby the first flank of the KISI disk 20 contacts the boss 41, the KISI disk 20 is driven by the boss 41 to rotate to a position where the small-diameter outer circular portion 25 of the KISI disk 20 is aligned with the abutting portion of the return assembly 80, whereby the return assembly 80 abuts against the small-diameter outer circular portion 25 of the KISI disk 20 under action of the resilience force of the coil bottom tail end 87, the release block 85 engages the ratchet teeth 102 of the ratchet 101 of the belt sensing assembly so that the belt strap cannot be extended any more; after the safety belt is worn a retraction of a length thereof occurs, but at this time, since the profiled hole 26 of the KISI disk 20 has a dimension in the length direction greater than the dimension of the boss 41, when transforming from the belt strap extension state to the belt strap retraction state, the boss 41 of the counting gear mechanism 40 has an idle stroke 23 in the KISI disk 20 in the belt strap retraction direction, so that the boss 41 in the idle stroke 23 cannot drive the KISI disk 20 to rotate reversely, and the release block 85 cannot be disengaged from the ratchet teeth 102 to release the ratchet 101, whereby the safety belt still cannot be extended, effectively avoiding the safety risk caused by the child who extends the belt strap while sitting, realizing fixation of the child seat, and further realizing the ALR function. When the belt strap is retracted until the belt strap is retracted from the KISI disk switching threshold length to the length of the retracted belt strap required for the retractor assembly to leave the ALR function, the boss 41 rotates reversely to the position contacting the second flank 22, so that the KISI disk 20 can be driven to rotate to the position where the large-diameter outer circular portion 24 of the KISI disk 20 is aligned with the abutting portion of the return assembly 80, whereby the return assembly 80 abuts against the large-diameter outer circular portion 24 of the KISI disk 20 and thereby swings downwards to the unblocking position, and its release block 85 releases the ratchet teeth 102 of the ratchet 101, so that the retractor assembly leaves the ALR function to return to the above-mentioned ELR function.

In other embodiments, when the switch device comprises only the KISI disk 20 and does not comprise the NHOM disk 30, the KISI disk 20 may further comprise a second large-diameter outer circular portion having a center of circle at a position the same as those of the large-diameter outer circular portion 24 and the small-diameter outer circular portion 25 of the KISI disk 20, and the second large-diameter outer circular portion of the KISI disk 20 has a diameter greater than that of the large-diameter outer circular portion 24 of the KISI disk 20. The KISI disk 20 can be arranged to be in a position where the second large-diameter outer circular portion of the KISI disk 20 is aligned with the abutting portion of the return assembly 80 when the extension length of the belt strap is less than the predetermined value, and the return assembly 80 is in the first blocking position when the return assembly 80 abuts against the second large-diameter outer circular portion of the KISI disk 20. As a result, after the counting gear mechanism measures the extension length of the belt strap, the switch device can determine whether the return assembly 80 is in the first blocking position based on the result of a judgment on whether the extension length of the belt strap exceeds the predetermined value.

When the restrain spring 60 releases the return assembly 80, the large-diameter outer circular portion 24 of the KISI disk 20 is aligned with the abutting portion of the return assembly 80, and the electromagnet 92 does not provide an electromagnetic force, the pawl 91 of the return assembly 80 will swing upward to the unblocking position by virtue of a resilience force of the cooperation of its coil bottom tail end 87 with the mechanical casing 10, so as to engage with the ratchet teeth 102 and lock the safety belt.

As shown in Fig. 7, the eccentric cam 50 may comprise a hollow cylindrical portion 51 having a shaft hole and an eccentric portion 52 encircling the outer side of the hollow cylindrical portion 51. The hollow cylindrical portion 51 can be connected to the belt sensing assembly 100 through spline-fitting, so as to drive the eccentric cam 50 to rotate through rotation of the belt sensing assembly 100. That is, the eccentric cam 50 is arranged to be blocked when the pawl 91 is open, and can rotate synchronously with the winding reel 140 when the pawl 91 is in contact with the electromagnet 92. The eccentric cam 50 can be in fitted connection with the counting gear mechanism 40 through the eccentric portion 52, wherein the eccentric portion 52 is eccentric with respect to the rotating shaft of the winding reel 140. The eccentric portion 52 can be configured to drive the counting gear mechanism 40 to rotate, so as to perform the function of the counting gear mechanism 40.

As a result, the eccentric cam 50 can drive the counting gear mechanism 40 to rotate, and the boss 41 on the counting gear mechanism 40 can drive the NHOM disk 30 and the KISI disk 20 to rotate, and the outer circular portions of the NHOM disk 30 and the KISI disk 20 can define a position of the return assembly 80.

Hereinafter, the operating principle of the electronic vehicle sensing safety belt retractor assembly of the present invention will be described with reference to Fig. 3A to Fig. 5C.

As shown in Fig. 3A to Fig. 3C, when the occupant just extends out the belt strap (i.e., the safety belt) but the extension length thereof does not exceed the predetermined value of the belt extension length, the return assembly 80 abuts against the outer wall surface of the large-diameter outer circular portion 31 of the NHOM disk 30, whereby the large-diameter outer circular portion 31 of the NHOM disk 30 limits the return assembly 80 to the first blocking position where the return assembly 80 blocks the pawl 91 on the electromagnetic switch 90, so that the pawl 91 cannot open to block the belt sensing assembly 100, so that the safety belt can be extended normally.

As shown in Fig. 4A to Fig. 4C, when the occupant continues to extend the belt strap, and the amount of extension of the belt strap exceeds the predetermined value (but does not reach the KISI disk switching threshold length), the eccentric cam 50 rotates synchronously with the winding reel 140 and drives the counting gear mechanism 40 to roll on the corresponding toothing portion 152 on the mechanical casing 10. Since there is a teeth number difference between the ring-shaped toothing portion 151 of the counting gear mechanism 40 and the corresponding toothing portion 152 of the mechanical casing 10, during the rolling of the counting gear mechanism 40, the boss 41 of the counting gear mechanism 40 performs a small-tooth-difference reduction motion and drives the NHOM disk 30 and the KISI disk 20 to rotate reversely relative to the winding reel 140, so that the NHOM disk 30 rotates to a position where the small-diameter outer circular portion 32 of the NHOM disk 30 is aligned with a rod end of the abutting arm 83 of the return assembly 80, and the KISI disk 20 rotates to a position where the large-diameter outer circular portion 24 of the KISI disk 20 is aligned with the rod end of the abutting arm 83 of the return assembly 80. During extension of the belt strap, the restrain spring 60 is driven by the eccentric cam 50 through a frictional force and has a tendency of rotation in the same direction as the rotation of the winding reel 140, and is limited at the blocking position shown in Fig. 3C by the limiting groove 11 on the mechanical casing 10. The swingable portion of the restrain spring 60 can contact and cooperate with the upper surface of the release block 85 when the restrain spring 60 is in the blocking position to provide a drive force to swing the return assembly 80 downward, so as to limit the return assembly 80 in the blocking position where the pawl 91 and the ratchet 102 are disengaged. Since the restrain spring 60 is kept in the position blocking the return assembly 80 during the process of extending the safety belt by the occupant, the vehicle sensing function is still suppressed, and the belt strap can be extended normally.

As shown in Fig. 5A to Fig. 5C, after the occupant wears the belt strap, the belt strap will be retracted for a short length, whereby, as the restrain spring 60, driven by the eccentric cam 50 through the frictional force, rotates in the belt strap retraction direction, the restrain spring 60 moves to the unblocking position in the limiting groove 11 shown in Fig. 5C and disengages from the release block 85 to unblock the return assembly 80. At this time, since the return assembly 80 has been aligned with the large-diameter outer circular portion 24 of the KISI disk 20, so that the return assembly 80 can swing upward, the pawl 91 therefore opens and drives the return assembly 80 to swing upward to the unblocking position. Here, the vehicle sensing suppression function is eliminated, and the vehicle sensing blocking function can be performed normally.

### Second Embodiment

Fig. 6 shows an exploded view of the safety belt retractor assembly according to a second embodiment of the present invention, its specific structure is essentially the same as that of the safety belt retractor assembly according to the first embodiment of the present invention. The only difference between them is that the restrain spring 60 with one end frictionally interference-fitted on the eccentric cam 50 is replaced by a restrain spring 60' with one end frictionally clamp-fitted on the outer wall 106 of the belt sensing assembly 100, and a fastening spring 61' can be added to limit the position of the restrain spring 60 in the direction of the rotating shaft of the winding reel 140. Wherein, the restrain spring 60' can be provided with a clamping portion 62, and the outer wall 106 of the belt sensing assembly 100 can be arranged in the clamping portion 62 of the restrain spring 60', so that the restrain spring 60' can swing around the belt sensing assembly 100 and be subjected to a frictional force in the same direction as the rotation direction of the winding reel 140. The fastening spring 61' is in a ring-shaped structure, and tabs 63 corresponding to slots 107 on the belt sensing assembly 100 can be arranged in the circumferential direction thereof, so that the fastening spring 61' can be buckled with the belt sensing assembly 100. Tabs 63 may be evenly distributed in the circumferential direction of the fastening spring 61'.

What has been described above is only the preferred embodiments of the present invention, and is not used to limit the scope of the present invention. Various variations can be made to the above-mentioned embodiments of the present invention. All simple and equivalent variations and modifications made according to the content of the claims and description of the application of the present invention fall within the protection scope of the claims of the present invention patent. What is not described in detail in the present invention is conventional technical content.

It should be noted that the terminology used here is only for the purpose of describing specific aspects, and not for limiting the disclosure. The singular forms "a" and "the one" as used herein shall include plural forms, unless the context explicitly states otherwise. It can be understood that the terms "including" and "inclusive" and other similar terms, when used in the application documents, specify the existence of the stated operations, elements and/or components, and do not exclude the existence or addition of one or more other operations, elements, components and/or combinations thereof. The term "and/or" as used herein includes all of any combinations of one or more relevant listed items. In the description of the attached drawings, similar reference signs always indicate similar elements.

The thickness of the elements in the attached drawings may be exaggerated for clarity. In addition, it can be understood that if an element is referred to as being on, coupled to, or connected to, another element, then the element may be directly formed on, coupled to, or connected to the other element, or there can be one or more intervening elements between them. Conversely, if the expressions "directly on", "directly coupled to" and "directly connected to" are used herein, it means that there are no intervening elements. Other words used to describe the relationship between elements should be interpreted similarly, such as "between" and "directly between", "attached" and "directly attached", "adjacent" and "directly adjacent" and so on.

Terms such as "top", "bottom", "upper", "lower", "above", "below", etc. herein are used to describe the relationship of one element, layer or region with respect to another element, layer or region as shown in the attached drawings. It can be understood that in addition to the orientations described in the attached drawings, these terms should also include other orientations of the device.

It can be understood that although the terms "first", "second", etc. may be used herein to describe different elements, these elements should not be limited by these terms. These terms are only used to distinguish one element from another. Therefore, the first element can be referred to as the second element without departing from the teachings of the concept of the present disclosure.

It may also be considered that all the exemplary embodiments disclosed herein may be arbitrarily combined with each other.

Finally, it should be pointed out that the aforementioned embodiments are only used to understand the present disclosure, and do not limit the protection scope of the present disclosure. For those of ordinary skill in the art, modifications can be made on the basis of the aforementioned embodiments, and these modifications do not depart from the protection scope of the present disclosure.

## Claims

1. A safety belt retractor assembly, comprising:
a winding reel configured to be rotatably mounted in a frame and capable of having a belt strap wound thereon;
a blocking device arranged to be capable of blocking the winding reel in an extension direction of the belt strap;
a belt sensing assembly configured to be capable of driving the blocking device to block the winding reel when a blocking condition is met, the belt sensing assembly comprising a ratchet including ratchet teeth, and the belt sensing assembly configured to be blocked when a ratchet tooth is engaged by a belt sensing assembly blocking member, so as to be capable of driving the blocking device to block the winding reel;
the belt sensing assembly blocking member being subjected to a spring force in a direction blocking the belt sensing assembly; and
a return assembly, the return assembly being in a first blocking position where the return assembly blocks the belt sensing assembly blocking member in a position not blocking the belt sensing assembly, when an extension length of the belt strap is less than a predetermined value;
wherein, the safety belt retractor assembly further comprises a restrain spring, the restrain spring being arranged to provide a drive force to limit the return assembly to a blocking position not blocking the belt sensing assembly when the winding reel rotates in the extension direction of the belt strap and the extension length of the belt strap exceeds the predetermined value, and to be in a position releasing the return assembly when the winding reel rotates in a direction opposite to the extension direction of the belt strap and the extension length of the belt strap exceeds the predetermined value.

2. The safety belt retractor assembly according to claim 1, wherein the restrain spring is swingable between a blocking position and an unblocking position, wherein in the blocking position of the restrain spring, the restrain spring provides the return assembly with the drive force to limit it to the blocking position not blocking the belt sensing assembly, wherein when the belt strap rotates reversely, the restrain spring releases the return assembly and reaches the unblocking position not blocking the return assembly.

3. The safety belt retractor assembly according to claim 1, wherein the safety belt retractor assembly comprises an electromagnetic switch, and the belt sensing assembly blocking member is configured as a pawl of the electromagnetic switch, the pawl being subjected to a spring force in a direction engaging with the ratchet teeth.

4. The safety belt retractor assembly according to claim 2, wherein measurement of the extension length of the belt strap is realized by a counting gear mechanism, wherein the counting gear mechanism is coupled to a shaft of the winding reel and is capable of judging whether the extension length of the belt strap exceeds the predetermined value and controlling a movement of a switch device according to the result of the judgment, wherein the switch device is configured to: limit the return assembly to the first blocking position when the extension length of the belt strap is less than the predetermined value; and release the return assembly so that the return assembly swings to the unblocking position, when the extension length of the belt strap exceeds the predetermined value and the restrain member is in the unblocking position, wherein, when the return assembly is in the unblocking position, the return assembly releases the pawl and does not engage with the ratchet teeth,
wherein, the counting gear mechanism comprises a ring-shaped toothing portion driven by the rotating shaft of the winding reel, the ring-shaped toothing portion being eccentrically arranged relative to a ring-shaped corresponding toothing portion and rolls on the corresponding toothing portion in a circumferential direction during rotation of the rotating shaft of the winding reel, so that the ring-shaped toothing portion is driven to perform reduction rotational motion.

5. The safety belt retractor assembly according to claim 2, wherein the safety belt retractor assembly further comprises a rotating member coupled to a rotating shaft of the belt sensing assembly, wherein the restrain spring is capable of being driven by the rotating member in a same direction as a rotation direction of the rotating member.

6. The safety belt retractor assembly according to claim 5, wherein, the restrain spring has one end mounted to the rotating member in an interference fit manner and is capable of being driven by the rotating member via frictional force.

7. The safety belt retractor assembly according to claim 5, wherein the rotating member is configured as an eccentric cam, wherein the eccentric cam comprises an eccentric portion and a cylindrical portion in an axial direction, and the restrain spring is mounted on the cylindrical portion.

8. The safety belt retractor assembly according to claim 2, wherein the restrain spring has one end clamp-fitted on an outer wall of the belt sensing assembly and is capable of being driven by the belt sensing assembly via frictional force.

9. The safety belt retractor assembly according to claim 2, wherein the return assembly comprises a release block, wherein when the restrain spring is in the blocking position, the restrain spring is in press fit with the release block to provide the return assembly with the drive force to limit it to the blocking position, wherein when the restrain spring is in the unblocking position, the restrain spring is separated from the release block and is in the position not blocking the return assembly.

10. The safety belt retractor assembly according to any one of claims 1-9, wherein the safety belt retractor assembly is configured as an electronic vehicle sensing safety belt retractor assembly.

11. The safety belt retractor assembly according to claim 4, wherein a boss is arranged on the counting gear mechanism, wherein the boss is configured to rotate by an angle when the ring-shaped toothing portion rolls for one full cycle, and is configured to drive the switch device.

12. The safety belt retractor assembly according to claim 11, wherein the switch device comprises:
a NHOM disk having a large-diameter outer circular portion and a small-diameter outer circular portion, the large-diameter outer circular portion and the small-diameter outer circular portion, for example, having a center of circle at the same position; wherein, during extension of the belt strap, the NHOM disk is configured to: be in a position where the large-diameter outer circular portion of the NHOM disk is aligned with an abutting portion of the return assembly when the extension length of the belt strap is less than the predetermined value; be rotated by the boss on the counting gear mechanism to a position where the small-diameter outer circular portion of the NHOM disk is aligned with the abutting portion of the return assembly when the extension length of the belt strap exceeds the predetermined value; wherein, when the restrain spring is in the unblocking position so that the abutting portion of the return assembly abuts against the large-diameter outer circular portion of the NHOM disk, the return assembly is in the first blocking position; and/or
a KISI disk having a large-diameter outer circular portion and a small-diameter outer circular portion with the same center of circle position and different outer diameters, wherein, during extension of the belt strap, the KISI disk is configured to: be rotated by the boss on the counting gear mechanism to a position where the large-diameter outer circular portion of the KISI disk is aligned with the abutting portion of the return assembly when the extension length of the belt strap exceeds the predetermined value and is less than a KISI disk switching threshold length; be rotated by the boss on the counting gear mechanism to a position where the small-diameter outer circular portion of the KISI disk is aligned with the abutting portion of the return assembly when the extension length of the belt strap reaches the KISI disk switching threshold length; wherein, when the abutting portion of the return assembly abuts against the large-diameter outer circular portion of the KISI disk, the return assembly is in the unblocking position;
wherein, under the circumstance where the switch device comprises only the NHOM disk, the return assembly is in the unblocking position when the extension length of the belt strap exceeds the predetermined value and the restrain spring is in the unblocking position, so that the abutting portion of the return assembly abuts against the small-diameter outer circular portion of the NHOM disk;
wherein, under the circumstance where the switch device comprises only the KISI disk, the KISI disk further comprises a second large-diameter outer circular portion, the second large-diameter outer circular portion having a center of circle at the same position as that of the large-diameter outer circular portion and the small-diameter outer circular portion of the KISI disk, and the second large-diameter outer circular portion having an outer diameter greater than that of the large-diameter outer circular portion of the KISI disk, wherein when the extension length of the belt strap is less than the predetermined value, the KISI disk is in a position where the second large-diameter outer circular portion of the KISI disk is aligned with the abutting portion of the return assembly, wherein when the abutting portion of the return assembly abuts against the second large-diameter outer circular portion of the KISI disk, the return assembly is in the first blocking position.

13. The safety belt retractor assembly according to claim 12, wherein the switch device comprises at least the KISI disk, and when the abutting portion of the return assembly abuts against the small-diameter outer circular portion of the KISI disk, the return assembly is in a second blocking position, in the second blocking position, the return assembly itself, for example, the release block of the return assembly engages with the ratchet teeth, so as to switch the retractor assembly from an ELR state to an ALR state.

14. The safety belt retractor assembly according to claim 12, wherein the KISI disk is provided with a profiled hole matched with the boss of the counting gear mechanism, the profiled hole having a first flank and a second flank, wherein the first flank is in press fit with the boss during extension of the belt strap, the second flank is opposite to the first flank and is in press fit with the boss during retraction of the belt strap, wherein the first flank and the second flank are located at both ends of the profiled hole in a length direction, the profiled hole having a dimension in the length direction greater than that of the boss so that the length of the profiled hole corresponds to a retracted belt strap length required when the belt strap is retracted from the KISI disk switching threshold length until the retractor assembly leaves the ALR state.
